# FASCICULE DE BREVET EUROPEEN

(11) **EP 0 811 553 B1**
(45) Date de publication et mention de la délivrance du brevet: **23.10.2002**
(21) Numéro de dépôt: 97401263.5
(22) Date de dépôt: 05.06.1997
(51) Int. Cl.: B64D 45/00, B64D 43/00

(54) **Indicateur de pilotage pour aéronef**
Steuerungsanzeige eines Flugzeuges
Piloting display for an aircraft

(30) Priorité: 07.06.1996 FR 9607041
(43) Date de publication de la demande: 10.12.1997
(73) Titulaire: EUROCOPTER, 13725 Marignane Cédex (FR)
(72) Inventeur: Francois, Daniel Claude, 13250 Cornillon (FR)
(74) Mandataire: Bonnetat, Christian

(56) Documents cités:
- DE-A- 3 640 452
- DE-C- 4 125 372
- FR-A- 2 731 069

## Description

La présente invention concerne un indicateur de pilotage pour aéronef.

Un tel indicateur est plus spécifiquement adapté à un aéronef à voilure tournante, notamment un hélicoptère.

Le pilotage d'un hélicoptère s'effectue grâce à la surveillance de nombreux instruments sur le tableau de bord, instruments qui sont pour la plupart représentatifs du fonctionnement de l'ensemble moteur et de l'aéronef. Pour des raisons physiques, il existe de nombreuses limitations que le pilote doit prendre en compte à chaque instant du vol. Ces différentes limitations dépendent généralement de la phase de vol et des conditions extérieures.

La plupart des hélicoptères construits actuellement sont équipés d'un ou deux turbomoteurs, généralement à turbine libre. La puissance est alors prélevée sur un étage basse pression de la turbine, lequel étage est mécaniquement indépendant de l'ensemble du compresseur et de l'étage haute pression de la turbine. La turbine de puissance d'un turbomoteur tournant entre 20000 et 50000 tours par minute, une boîte de réduction spéciale est nécessaire pour la liaison au(x) rotor(s) ; la boîte de transmission principale.

Les limitations thermiques du moteur et les limitations en couple de la boîte de transmission principale permettent de définir trois régimes normaux d'utilisation du moteur :
- le régime de décollage, utilisable pendant cinq à dix minutes, correspondant à un niveau de couple pour la boîte de transmission et un échauffement pour la turbine de moteur admissibles pendant un temps limité sans dégradation notable : c'est la puissance maximale au décollage (PMD),
- le régime maximal continu pendant lequel, à aucun moment, ne sont dépassées les possibilités de la boîte de transmission, ni celles résultant de l'échauffement maximal admissible en continu devant les aubages à haute pression du premier étage de la turbine : c'est la puissance maximale en continu (PMC),
- le régime maximal en transitoire, défini par la butée de régulation : on parle alors de puissance maximale en transitoire (PMT).

Il existe aussi des régimes de surpuissance en urgence sur les appareils multimoteurs, utilisés en cas de panne d'un moteur :
- le régime d'urgence pendant lequel les possibilités de la boîte de transmission sur les étages d'entrée et les possibilités thermiques du moteur sont utilisées au maximum : on parle de puissance de super urgence (PSU) utilisable pendant trente secondes consécutives, au maximum, et trois fois pendant un vol. L'utilisation de la PSU entraîne la dépose et la révision du moteur ;
- le régime d'urgence pendant lequel les possibilités de la boîte de transmission sur les étages d'entrée et les possibilités du moteur sont largement utilisées : on parle alors de puissance maximale d'urgence (PMU) utilisable pendant deux minutes après la PSU ou deux minutes trente secondes consécutives, au maximum ;
- le régime d'urgence pendant lequel les possibilités de la boîte de transmission sur les étages d'entrée et les possibilités thermiques du moteur sont utilisées sans endommagement : on parle de puissance intermédiaire d'urgence (PIU) utilisable trente minutes en continu pour le reste du vol après la panne du moteur.

Le motoriste établit, par calculs ou par essais, les courbes de puissance disponible d'un turbomoteur en fonction de l'altitude et de la température, et cela pour chacun des régimes définis ci-dessus.

Les limitations indiquées sont généralement surveillées par l'intermédiaire de différents paramètres affichés sur différents cadrans répartis en différents endroits du tableau de bord de l'appareil, ce qui, bien entendu, nuit à leur lisibilité.

Par le document DE-A-3 640 452, on connaît un procédé et un dispositif pour surveiller des paramètres des moteurs d'un hélicoptère, en particulier le couple moteur, la température TOT et la vitesse de rotation du module de basse pression. L'objet de ce document connu est de simplifier la surveillance d'une pluralité de paramètres qui sont surveillés simultanément de manière à réduire la charge de travail des pilotes.

Pour ce faire, ce document connu prévoit, successivement et de façon répétitive :
- de mesurer les valeurs effectives de la pluralité des différents paramètres pris en compte ;
- de comparer ces valeurs effectives à des valeurs limites, relatives à ces paramètres ;
- à partir de toutes ces comparaisons, de déterminer parmi lesdites valeurs de paramètre, la valeur la plus critique, c'est-à-dire celle qui est la plus proche de sa valeur limite ou celle qui la dépasse le plus ; et
- d'afficher uniquement cette valeur critique ; ainsi que
- si nécessaire, d'émettre des signaux d'alarme.

Par conséquent, seul le paramètre le plus critique parmi tous les paramètres considérés est affiché, ce qui réduit la charge de travail du pilote qui peut ainsi limiter sa surveillance visuelle à un seul moyen d'affichage, tout en présentant une sécurité suffisante, puisque le paramètre qui risque le plus de dépasser (ou qui dépasse le plus) les valeurs limites associées est toujours affiché.

Ce document DE-A-3 640 452 connu décrit un dispositif qui comprend au moins un capteur qui est apte à délivrer des informations relatives au régime du générateur de gaz d'un moteur, des moyens de calcul qui traitent des informations pour leur affichage et qui permettent de calculer une information représentant l'écart entre la valeur réelle et une valeur de consigne du régime du générateur de gaz, et des moyens d'affichage munis d'un écran de visualisation qui présentent, sur ledit écran de visualisation, les informations relatives aux valeurs du régime du générateur de gaz.

Par ailleurs, par le document DE-C-4 125 372, on connaît un procédé et un dispositif qui ont pour objet de perfectionner, respectivement, le procédé et le dispositif divulgués par le document DE-A-3 640 452 précité.

Toutefois, concernant les paramètres à surveiller, ce document DE-C-4 125 372 cite uniquement les couples moteurs et les températures TOT des différents moteurs de l'aéronef.

La présente invention a pour but d'éviter les inconvénients précités et concerne un indicateur de pilotage pour aéronef présentant, pour le pilote, une indication synthétique, et facilement lisible et exploitable.

A cet effet, selon l'invention, l'indicateur de pilotage pour aéronef, destiné à fournir une information de marge de puissance disponible sur au moins un moteur de l'aéronef en fonction des conditions de vol, comprenant au moins un capteur qui est apte à délivrer des informations relatives au régime du générateur de gaz Ng du moteur, des moyens de calcul qui traitent des informations pour leur affichage et qui, à partir de l'information relative au régime du générateur de gaz Ng, permettent de calculer une information ΔNg représentant l'écart entre la valeur réelle de Ng et la valeur de consigne au décollage, et des moyens d'affichage munis d'un écran de visualisation qui présentent, sur ledit écran de visualisation, les informations relatives aux valeurs du régime du générateur de gaz Ng, est remarquable en ce que les moyens d'affichage indiquent en permanence sur ledit écran de visualisation, par un affichage numérique, la valeur du régime du générateur de gaz Ng et matérialisent en permanence, sur ledit écran de visualisation, la valeur de ΔNg par la position d'une aiguille se déplaçant devant un cadran qui comporte une échelle graduée en pourcentage, présentant un certain nombre de plages et repères correspondant à des états spécifiques de fonctionnement de l'aéronef.

Ainsi, le pilote (ou le copilote) de l'aéronef dispose, à tout instant, d'une information synthétique et facile à lire, relative à la marge de puissance des boîtes de transmission et des marges thermiques du moteur.

Dans le cas d'un appareil multimoteur, les informations de marge de puissance peuvent être présentées sur des indicateurs séparés (un par moteur) ou regroupées sur un indicateur unique.

La présente invention comprend une particularité de calcul qui permet de transformer les limitations variables dans le domaine de vol (par exemple les valeurs limites NGLIM de NG, qui sont fonction de l'altitude et de la température extérieure) en positions fixes (par exemple des repères par des "traits de peinture" sur l'écran classique d'un indicateur) et de placer l'aiguille (valeur du paramètre NG) par rapport à ces positions fixes à tout moment.

Le fait que, sur ledit écran de visualisation, la valeur du régime du générateur de gaz Ng est indiquée par un affichage numérique, est très utile lors du démarrage du moteur.

En particulier, ledit cadran comporte une échelle graduée en pourcentage, présentant un certain nombre de plages et repères correspondant à des états spécifiques de fonctionnement de l'aéronef, qui sont facilement lisibles par le pilote.

Par ailleurs, ledit écran de visualisation peut comprendre une indication d'un signal provenant de la vanne de décharge du moteur et/ou présenter des indications relatives au fonctionnement d'un aéronef bimoteur dont un des moteurs est en panne.

Les figures du dessin annexé feront bien comprendre comment l'invention peut être réalisée.

La figure 1 est un schéma synoptique de l'indicateur de pilotage selon l'invention.

La figure 2 montre, plus en détail, l'écran de visualisation associé à l'indicateur selon l'invention.

L'indicateur de pilotage pour aéronef selon l'invention est destiné à fournir (afficher) la marge de puissance disponible sur au moins un moteur de l'aéronef en fonction des conditions de vol. Bien qu'il soit utilisable pour d'autres types d'aéronef, la description suivante se rapportera à l'exemple spécifique d'un aéronef à voilure tournante (hélicoptère) comportant au moins un turbomoteur d'entraînement d'au moins un rotor, avec les paramètres particuliers de surveillance du moteur liés à cet exemple.

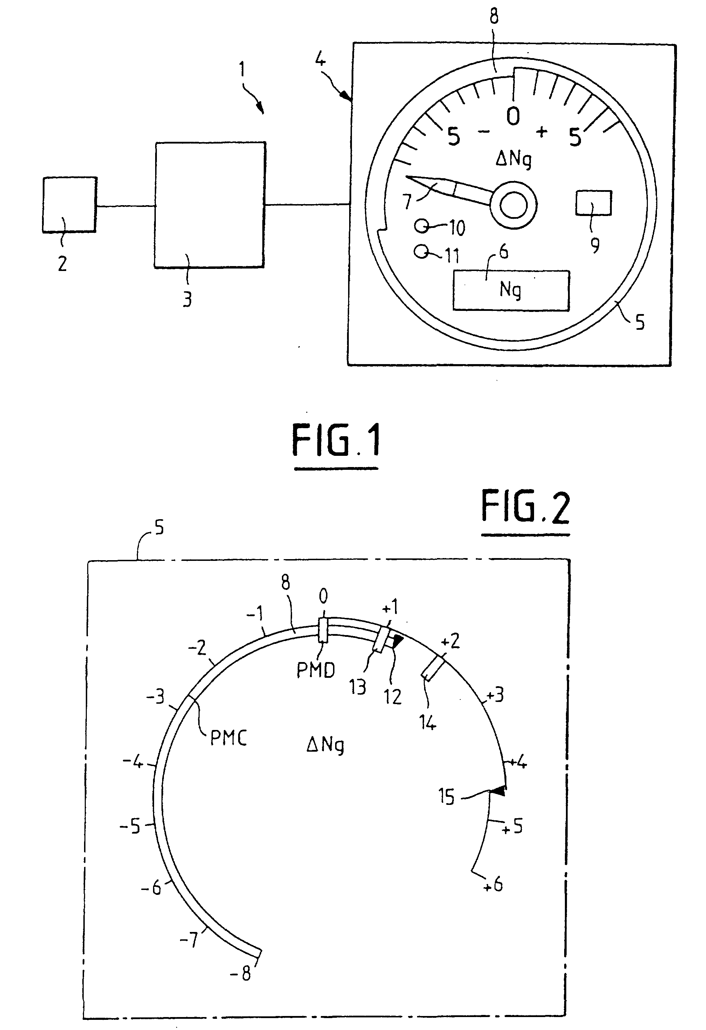

Comme on le voit sur la figure 1, l'indicateur 1 selon l'invention comprend un capteur 2 apte à délivrer des informations relatives au régime du générateur de gaz (ou vitesse de rotation) du moteur (Ng), qui peut être un signal direct issu de la roue phonique du moteur. Le capteur 2 est relié à un calculateur 3 apte à calculer, à partir de l'information relative au régime du générateur de gaz, une information Ng représentant l'écart entre la valeur réelle de Ng et la valeur de consigne au décollage, soit Ng = Ng - Ng*_{pmd}. Lesdites informations, traitées de plus dans le calculateur 3 pour pouvoir être affichées, sont transmises à des moyens d'affichage 4 présentant, sur un écran de visualisation 5, les informations relatives aux valeurs du régime du générateur de gaz Ng et de Ng.

Plus précisément, la valeur du régime du générateur de gaz Ng est indiquée par un affichage numérique 6 (par exemple à cristaux liquides), tandis que la valeur de Ng est matérialisée par la position d'une aiguille 7 (sur le dessin, l'aiguille 7 est "inactive") se déplaçant, entre deux butées mécaniques non montrées, devant un cadran 8 comportant une échelle graduée en pourcentage (par exemple de - 8 à + 6 comme indiqué) comportant des marques explicitées ci-après en regard de la figure 2.

Par ailleurs, l'écran de visualisation 5 peut présenter un certain nombre d'autres indications, telles qu'une indication 9 d'un signal en tout ou rien provenant directement de la vanne de décharge du moteur, dont les caractéristiques sont :
. 0 volt : vanne de décharge ouverte
. circuit ouvert : vanne de décharge fermée.

De plus, dans le cas d'un appareil bimoteur dont un des moteurs ne fonctionne pas, situation dite de puissance OEI ("One-Engine-Inoperate"), un signal en tout ou rien est fourni par le calculateur, qui indique la sélection par celui-ci du niveau de puissance OEI 30", dont les caractéristiques sont :
. 0 volt, pour OEI 30" sélectionnée : diode 10 allumée,
. circuit ouvert, pour OEI 30" non sélectionnée : diode 10 éteinte,
. 0 volt discontinu, lorsque la puissance OEI 30" a été utilisée pendant 25 secondes consécutives et que le pilote doit commander le niveau inférieur, la diode 10 clignote. Le clignotement cesse dès que le niveau devient inférieur à la puissance OEI 2mn (plus une marge de régulation de, par exemple, 0,4 % de Ng), ou que le niveau de puissance OEI 2mn est sélectionné par le pilote.

La sélection par le calculateur du niveau de puissance OEI 2mn fournit un signal en tout ou rien, dont les caractéristiques sont :
. 0 volt, pour OEI 2mn sélectionnée : diode 11 allumée,
. circuit ouvert, pour OEI 2mn non sélectionnée : diode 11 éteinte,
. 0 volt discontinu, lorsque la puissance OEI 2mn a été utilisée pendant 2 minutes et 25 secondes consécutives et que le pilote doit baisser le pas pour afficher le niveau inférieur, la diode 11 clignote. Le clignotement cesse dès que le niveau devient inférieur à la puissance OEI illimitée (plus une marge de pilotage de, par exemple, 0,3 % de Ng).

Il est bien entendu que, dans ce cas, en vol normal (bimoteur), aucune diode ne doit être allumée. En revanche, en vol monomoteur, une des deux diodes doit être allumée.

Pour ne pas pénaliser les performances du moteur restant en service (panne d'un moteur en vol bimoteur), la consommation de puissance P2 (correspondant à des prélèvements d'air pour la climatisation de la cabine, par exemple) est automatiquement coupée dès la détection d'un dépassement de la limitation transitoire en vol bimoteur. Le chauffage, gros consommateur de puissance P2, est aussi coupé pour le cas de blocage de la vanne de prélèvement de P2. Seuls les joints gonflables et le dégivrage automatique de l'empennage horizontal, faibles consommateurs, restent alimentés en P2. Le chauffage pourra être réarmé par l'équipage dès que le régime OEI illimité est affiché.

Les marques indiquées sur le cadran 8 sont détaillées ci-après en regard de la figure 2, les valeurs numériques n'étant indiquées qu'à titre d'exemple :
. arc vert (jusqu'à la PMC) : - 8 à - 2,7
. arc jaune (PMC à PMD) : - 2,7 à 0
. trait radial rouge (PMD) : 0
. triangle rouge transitoire bimoteur 12 : + 1,3
. trait radial jaune discontinu 13 (OEI illimitée) : + 1,0
. trait radial rouge discontinu 14 (OEI 2mn) : + 2,0
. triangle rouge transitoire 15 (OEI 30") : + 4,5

On voit ainsi que le cadran 8 se divise en fait, essentiellement, en deux plages :
. fonctionnement bimoteur de - 8 à + 1,3
. puissance OEI de + 1 à + 4,5.

## Revendications

1. Indicateur de pilotage pour aéronef, destiné à fournir une information de marge de puissance disponible sur au moins un moteur de l'aéronef en fonction des conditions de vol, comprenant au moins un capteur (2) qui est apte à délivrer des informations relatives au régime du générateur de gaz Ng du moteur, des moyens de calcul (3) qui traitent des informations pour leur affichage et qui, à partir de l'information relative au régime du générateur de gaz Ng, permettent de calculer une information ΔNg représentant l'écart entre la valeur réelle de Ng et la valeur de consigne au décollage, et des moyens d'affichage (4) munis d'un écran de visualisation (5) qui présentent, sur ledit écran de visualisation (5), les informations relatives aux valeurs du régime du générateur de gaz Ng,
**caractérisé en ce que** les moyens d'affichage (4) indiquent en permanence sur ledit écran de visualisation (5), par un affichage numérique (6), la valeur du régime du générateur de gaz Ng et matérialisent en permanence, sur ledit écran de visualisation (5), la valeur de ΔNg par la position d'une aiguille (7) se déplaçant devant un cadran (8) qui comporte une échelle graduée en pourcentage, présentant un certain nombre de plages et repères correspondant à des états spécifiques de fonctionnement de l'aéronef.

2. Indicateur selon la revendication 1,
**caractérisé en ce que** ledit écran de visualisation (5) comprend une indication (9) d'un signal tout ou rien provenant de la vanne de décharge du moteur et indiquant si la vanne de décharge du moteur est ouverte ou fermée.

3. Indicateur selon l'une des revendications 1 et 2,
**caractérisé en ce que** ledit écran de visualisation (5) présente des indications (10,11) relatives au fonctionnement d'un aéronef bimoteur dont un des moteurs est en panne.

## Patentansprüche

1. Steuerungsanzeigeinstrument für ein Luftfahrzeug, das eine Angabe zur an mindestens einem Motor des Luftfahrzeugs in Abhängigkeit von den Flugbedingungen verfügbaren Leistungsspanne liefern soll und mindestens einen Messfühler (2), der in der Lage ist, Angaben zum Betriebsbereich des Gasgenerators Ng zu liefern, und Rechenmittel (3) umfasst, die Angaben zur Anzeige verarbeitet und die ausgehend von der Angabe zum Betriebsbereich des Gasgenerators Ng die Berechnung einer Angabe ΔNg, die die Differenz zwischen dem Istwert von Ng und dem Startsollwert darstellt, ermöglicht, sowie mit einer optischen Anzeigeeinheit (5) versehene Anzeigemittel (4), die auf der genannten optischen Anzeigeeinheit (5) Angaben zu den Werten des Betriebsbereichs des Gasgenerators Ng anzeigen,
**dadurch gekennzeichnet, dass** die Anzeigemittel (4) auf der genannten optischen Anzeigeeinheit (5) mittels digitaler Anzeige (6) ständig den Wert des Betriebsbereichs des Gasgenerators Ng anzeigen und auf der genannten optischen Anzeigeeinheit (5) ständig den Wert von ΔNg durch die Position eines Zeigers (7) materialisieren, der sich vor einer Skalenscheibe (8) bewegt, die eine in Prozent eingeteilte Skala umfasst, die eine bestimmte Anzahl von Bereichen und Bezugszeichen aufweist, die speziellen Betriebszuständen des Luftfahrzeugs entsprechen.

2. Anzeigeinstrument nach Anspruch 1,
**dadurch gekennzeichnet, dass** die genannte optische Anzeigeeinheit (5) eine Anzeige (9) eines vom Entlastungsventil des Motors kommenden Alles-oder-Nichts-Signals umfasst und anzeigt, ob das Entlastungsventil des Motors geöffnet oder geschlossen ist.

3. Anzeigeinstrument nach Anspruch 1 oder 2,
**dadurch gekennzeichnet, dass** die genannte optische Anzeigeeinheit (5) Anzeigen (10,11) zum Betrieb eines zweimotorigen Luftfahrzeugs liefert, von dem ein Motor ausgefallen ist.

## Claims

1. Aircraft flight indicator intended to supply a data item regarding the power margin available on at least one engine of the aircraft as a function of the flight conditions, comprising at least one sensor (2) which is capable of delivering data relating to the speed Ng of the gas generator of the engine,
calculation means (3), which process the data so that it can be displayed and which, using the data item relating to the speed Ng of the gas generator, allow the calculation of a data item ΔNg representing the difference between the actual value of Ng and the reference value on take-off; and
display means (4) equipped with a display screen (5) which show the data relating to the values of the speed Ng of the gas generator on the said display screen (5),
**characterized in that** the display means (4) constantly indicate, on the said display screen (5), via a digital display (6), the value of the speed Ng of the gas generator and constantly show, on the said display screen (5), the value of ΔNg by the position of a pointer (7) moving over a dial (8) which has a scale which is graduated in percentages, having a certain number of regions and marks which correspond to specific operating statuses of the aircraft.

2. Indicator according to Claim 1,
**characterized in that** the said display screen (5) comprises an indication (9) of an on/off signal coming from the engine discharge valve and indicating whether the engine discharge valve is open or closed.

3. Indicator according to either of Claims 1 and 2,
**characterized in that** the said display screen (5) shows indications (10, 11) relating to the operation of a twin-engined aircraft in which one of the engines has broken down.
